# EUROPEAN PATENT APPLICATION

(11) **EP 2 840 468 A1**
(43) Date of publication of application: **25.02.2015**
(21) Application number: 12874368.9
(22) Date of filing: 14.06.2012
(51) Int. Cl.: G06F 3/041

(54) **INPUT METHOD AND DEVICE**

(30) Priority: 20.04.2012 CN 201210119697
(71) Applicant: ZTE Corporation, Shenzhen, Guangdong 518057 (CN)
(72) Inventor: SU, Xing, Shenzhen Guangdong 518057 (CN)
(74) Representative: Mozzi, Matteo
(86) International application number: PCT/CN2012/076883
(87) International publication number: WO 2013/155776

(57) **Abstract**

The present invention discloses an input method and an input device. The method includes: input coverage of a user is determined according to an input coordinate of the user and a set cursor area; coincidence degrees are calculated between the input coverage and coverage of items to be input; and an input item of the user is determined according to the coincidence degrees. By the present invention, the problem of high input error rate of a touch screen terminal in a related art is solved, the accuracy of input with a touch screen mobile phone is improved, and an input speed of the user can further be increased.

## Description

### Technical Field

The present invention relates to the field of communication, particularly to an input method and an input device.

### Background

At present, more and more users use smart terminals (for example, smart phones), and particularly, a touch screen smart terminal is more and more widely used. For the touch screen smart terminal, input is realized usually by virtue of an item to be input in a touch screen. For example, for the input of a character on a soft keyboard of the smart terminal, the character may be clicked by a finger as a stylus.

However, due to a limitation of the screen of the smart terminal, display coverage of the item to be input on the screen may be very small, for example, the character on the soft keyboard is usually very small when being displayed on the screen, and a size of the finger or another stylus is unmatched with a display size of the character, so that the phenomenon that a touched item is not that the user actually wants to select frequently occurs, for example, the input character may not be that the user actually wants to input, or may be an unnecessary character and the like.

For the problem of high input error rate of the touch screen smart terminal in a related art, an effective solution has not been proposed yet.

### Summary

The embodiments of the present invention provide an input method and an input device, so as to at least solve the problem of high input error rate of a touch screen terminal in the related art.

According to an embodiment of the present invention, an input method is provided, including: determining input coverage of a user according to an input coordinate of the user and a set cursor area; calculating coincidence degrees between the input coverage and coverage of items to be input; and determining an input item of the user according to the coincidence degrees.

Preferably, determining the input item of the user according to the coincidence degrees includes: selecting an item to be input with a greater coincidence degree from the items to be input as the input item of the user; or, selecting an item to be input of which the coincidence degree exceeds a preset threshold value from the items to be input as the input item of the user.

Preferably, after determining the input item of the user according to the coincidence degrees, the method further includes: notifying the user that the input item is input in a way of producing a corresponding pronunciation of the input item and/or displaying a corresponding effect of clicking the input item.

Preferably, after determining the input item of the user according to the coincidence degrees, the method further includes: detecting whether a next input of the user is canceling the input item or not; under the condition that a detecting result is positive, determining that the input item is incorrectly input; and under the condition that the detecting result is negative, determining that the input item is correctly input.

Preferably, the method further includes: storing a specified number of latest input coordinates of the input item which is correctly input; and performing training according to the specified number of input coordinates by virtue of a smart neural network, and resetting the cursor area according to a training result.

Preferably, the items to be input include: characters of a virtual keyboard.

According to another embodiment of the present invention, an input device is provided, including: a confirmation module, configured to determine input coverage of a user according to an input coordinate of the user and a set cursor area; a calculation module, configured to calculate coincidence degrees between the input coverage and coverage of items to be input; and a determination module, configured to determine an input item of the user according to the coincidence degrees.

Preferably, the device further includes: a notification module, configured to notify the user that the input item is input in a way of producing a corresponding pronunciation of the input item and/or displaying a corresponding effect of clicking the input item.

Preferably, the device further includes: a detecting module, configured to detect whether a next input of the user is canceling the input item or not; and a second determination module, configured to, under the condition that a detecting result is positive, determine that the input item is incorrectly input, and under the condition that the detecting result is negative, determine that the input item is correctly input.

Preferably, the device further includes: a storing module, configured to store a specified number of latest input coordinates of the input item which is correctly input; a training module, configured to perform training according to the specified number of input coordinates by virtue of a smart neural network; and a resetting module, configured to reset the cursor area according to a training result.

In the embodiments of the present invention, the input coverage of the user is determined according to the input coordinate of the user and the set cursor area, the coincidence degrees between the input coverage and the coverage of the items to be input are calculated and the input item of the user is determined according to the coincidence degrees is adopted. Therefore the problem of high input error rate of the touch screen terminal in the related art is solved, the accuracy of input with a touch screen mobile phone is improved, and an input speed of the user can further be increased.

### Brief Description of the Drawings

The drawings are described here to provide further understanding of the present invention, and form a part of the present invention. The schematic embodiments and description of the present invention are adopted to explain the present invention, and do not form improper limits to the present invention. In the drawings:
Fig. 1 is a flowchart of an input method according to an embodiment of the present invention;
Fig. 2 is a structure diagram of an input device according to an embodiment of the present invention;
Fig. 3 is a first structure diagram of a preferred input device according to an embodiment of the present invention;
Fig. 4 is a second structure diagram of a preferred input device according to an embodiment of the present invention;
Fig. 5 is a third structure diagram of a preferred input device according to an embodiment of the present invention;
Fig. 6 is a flowchart of a method for improving character input efficiency of a smart phone according to embodiment 2 of the present invention; and
Fig. 7 is a schematic diagram of an example of simultaneously covering three characters by a cursor according to preferred embodiment 2 of the present invention.

### Detailed Description of the Embodiments

The present invention is described below with reference to the drawings and embodiments in detail. It is important to note that the embodiments of the present invention and the characteristics in the embodiments can be combined under the condition of no conflicts.

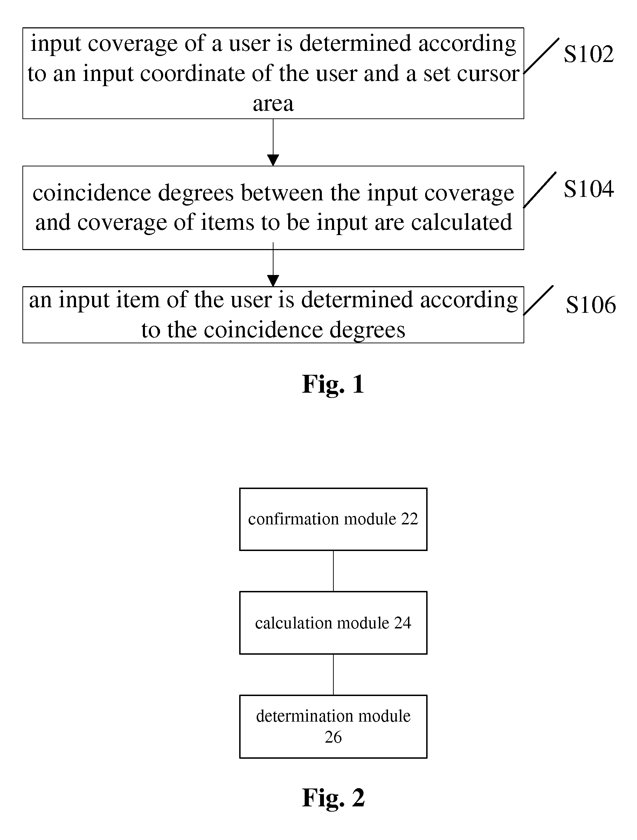

The embodiment provides an input method, Fig. 1 is a flowchart of an input method according to an embodiment of the present invention, and as shown in Fig. 1, the method includes the following steps:
S102, input coverage of a user is determined according to an input coordinate of the user and a set cursor area;
S104, coincidence degrees between the input coverage and coverage of items to be input are calculated; and
S106, an input item of the user is determined according to the coincidence degrees.

In the embodiment, by the above-mentioned steps, a mode of calculating the coincidence degrees between the input coverage of the user and the coverage of the items to be input and determining the input item of the user according to the coincidence degrees is adopted, and compared with a mode of determining the input item of the user according to the coverage of the item to be input where the input coordinate of the user falls in a related art, has the advantages that the probability of occurrence of an input error condition can be lowered because a criterion is changed from a point to a range, the problem of high input error rate of a touch screen terminal in the related art is solved, the accuracy of input with a touch screen mobile phone is improved, and an input speed of the user can further be increased.

There are many ways for setting the cursor area, for example, when a shape of a cursor is a round, the input coordinate may be taken as a circle center of the cursor, and a coverage area of the cursor is set by setting a radius or diameter of the cursor; when the shape of the cursor is a square, the input coordinate may be taken as a geometric center, and the coverage area of the cursor is set in ways of setting a side length of the cursor and the like; of course, along with a change in the shape of the cursor, there are other ways for setting the cursor area, and there is no need to go into details. The items to be input may be characters of a virtual keyboard, links in a webpage browser, and other application programs in a smart phone and the like.

There are many ways for determining the input item of the user according to the coincidence degrees in S106, for example, the item to be input with a maximum coincidence degree may be selected from multiple items to be input within the cursor area as the input item of the user, when there is only one item to be input within the cursor area, it may be used as the input item of the user, and when there are no items to be input within the cursor area or the coincidence degrees of multiple items to be input with greater coincidence degrees within the cursor area are the same, the input is given up; or, the item to be input of which the coincidence degree exceeds a preset threshold value may also be selected from the items to be input as the input item of the user, for example, if there are two items to be input within the cursor area but the coincidence degree between the coverage of any of the two items to be input and the cursor area does not exceed the preset threshold value (for example, 50 percent), the input is given up. Of course, other ways may also be adopted for determination.

Preferably, in order to enable the user to learn about that a result of this input is the above-mentioned input item to determine or give up this input, the user may be notified that the input item is input in a way of producing a corresponding pronunciation of the input item and/or displaying a corresponding effect of clicking the input item after S106. For example, if the input item is an English letter A in the virtual keyboard, a pronunciation of A may be produced or a display effect of clicking A, such as a key pressing effect or a circling effect, may be presented to notify the input of an item in an input field to the user after S106. In addition, a position of a coordinate pressed by the user on a screen may be displayed to enable the user to know the position of the pressed coordinate and conveniently correct the input position. In such a way, the user may conveniently learn about that this input is correct or not.

Under the condition that the user discovers that the input is incorrect, the user usually cancels the input item, so that after S106, the method may also include: it is detected whether the next input of the user is canceling the input item or not after the user inputs the input item; under the condition that a detecting result is positive, it is determined that the input item is incorrectly input; and under the condition that the detecting result is negative, it is determined that the input item is correctly input.

After detecting whether the input item is correctly input or not, as a preferred implementation method, the method may further include: a specified number (for example, the specified number is N, and N may be a natural number) of latest input coordinates of the correct input item is stored, wherein all the input coordinates are stored if the input item is not correctly input for N times, and if the input item is correctly input for more than N times, the oldest input coordinate may be deleted, and the input coordinate of the input item which is correctly input this time is stored; then the stored input coordinates of the input item may be trained by virtue of a smart neural network, and the cursor area is reset according to a training result. In such a way, as the training time grows, the reset cursor area or shape is more suitable for improving the input accuracy and further increasing the input speed of the user. A mode of training by virtue of the smart neural network is described in detail in the related art, and there is no need to go into details.

Corresponding to the method, the embodiment also provides an input device, which is configured to implement the embodiments and the preferred embodiments, and that what has been described will not be repeated. For example, a term module, used below, is a combination of software and/or hardware for realizing preset functions. The device described in the following embodiment is preferably implemented by software, but the implementation of the device with hardware or the combination of software and hardware is also possible and conceived.

Fig. 2 is a structure diagram of an input device according to an embodiment of the present invention, and as shown in Fig. 2, the device includes: a confirmation module 22, a calculation module 24 and a determination module 26. Each module is described below in detail.

The confirmation module 22 is configured to determine input coverage of a user according to an input coordinate of the user and a set cursor area; the calculation module 24 is connected with the confirmation module 22, and is configured to calculate coincidence degrees between the input coverage and coverage of items to be input; and the determination module 26 is connected with the calculation module 24, and is configured to determine an input item of the user according to the coincidence degrees of the calculation module 24.

In the embodiment, the coincidence degrees between the input coverage of the user and the coverage of the items to be input are calculated through the calculation module 24 and the input item of the user is determined according to the coincidence degrees through the determination module 26. The above mentioned solution compared with the solution in the traditional art that the input item of the user is determined according to the coverage of the item to be input where the input coordinate of the user falls, has the advantages that the probability of occurrence of an input error condition may be lowered because a criterion is changed from a point to a range, the problem of high input error rate of the touch screen terminal in the related art is solved, the accuracy of input with the touch screen mobile phone is improved, and the input speed of the user can further be increased.

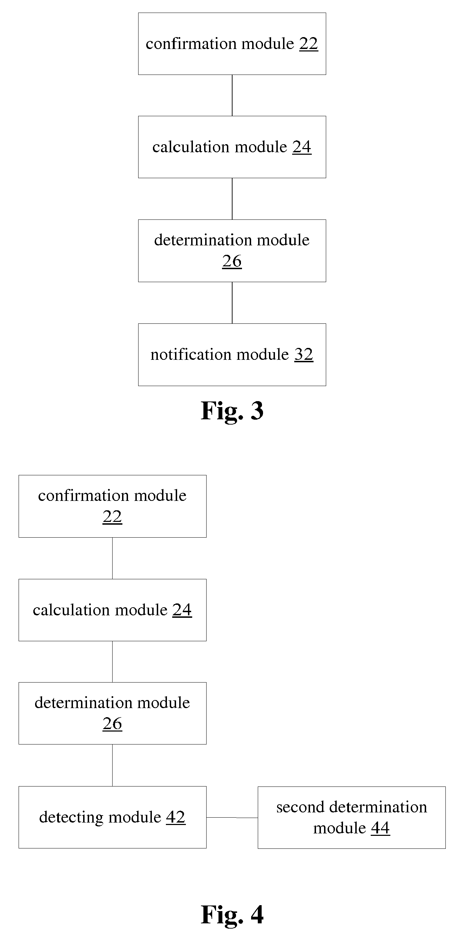

Fig. 3 is a first structure diagram of a preferred input device according to an embodiment of the present invention, and as shown in Fig. 3, the device may further include: a notification module 32, connected with the determination module 26 and configured to notify the user that the input item is input in a way of producing a corresponding pronunciation of the input item and/or displaying a corresponding effect of clicking the input item.

Fig. 4 is a second structure diagram of a preferred input device according to an embodiment of the present invention, and as shown in Fig. 4, the device may further include: a detecting module 42, connected with the determination module 26 and configured to detect whether the next input of the user is canceling the input item or not; and a second determination module 44, connected with the detecting module 42 and configured to, under the condition that a detecting result of the detecting module 42 is positive, determine that the input item is incorrectly input, and under the condition that the detecting result of the detecting module 42 is negative, determine that the input item is correctly input.

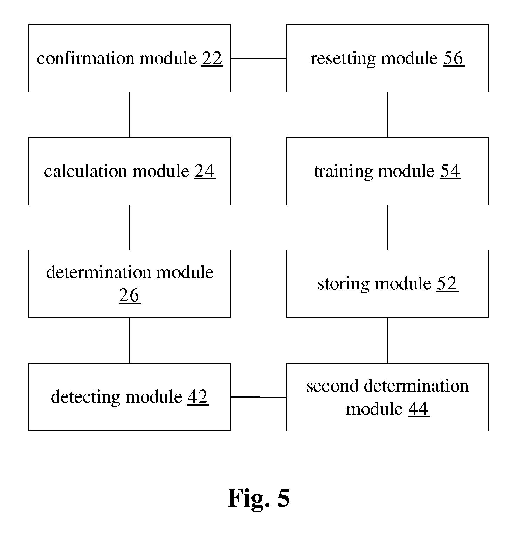

Fig. 5 is a third structure diagram of a preferred input device according to an embodiment of the present invention, and as shown in Fig. 5, the device may further include: a storing module 52, connected with the second determination module 44 and configured to store a specified number of latest input coordinates of the input item which is correctly input; a training module 54, connected with the storing module 52 and configured to perform training according to the specified number of input coordinates by virtue of a smart neural network; and a resetting module 56 connected with the confirmation module 22 and the training module 54 and configured to reset the cursor area according to a training result of the training module 54.

Description will be given below with reference to the preferred embodiments, and the following preferred embodiments are combined with the above-mentioned embodiments and the preferred implementation methods thereof.

Description is given in the preferred embodiment by taking the condition that the above-mentioned smart terminal is a touch screen smart phone as an example, and a method for improving the input efficiency of the smart phone is provided, so as to improve the input efficiency and reduce misoperation.

### Preferred embodiment 1

In the preferred embodiment, the cursor size displayed on the screen may be changed, when there is a character covered by the cursor and having the highest coincidence degree with the cursor, the character is input, otherwise the input is given up, and the character is not generated. In addition, a coordinate of an input point may be stored for adaptation to the cursor in the future, and after the character is correctly input for N times, the neural network is started to train the coordinate to obtain a cursor suitable for the character, and meanwhile, a corresponding pronunciation of the character and a corresponding effect of clicking the character may also be input, and by the effect, the user may know the clicking position to more accurately click the character when inputting the character the next time. Preferably, the function may be a set item, and may be detected whether to be enabled or not by the user.

A system for improving the character input efficiency of the smart phone in the preferred embodiment includes the following modules:
a soft keyboard displayed on a smart phone screen (touch screen), and the system further includes: an identification module for the coordinate of the input point on the screen, a setting module for the cursor area and a calculation module for detecting the coincidence degrees between the cursor area and the characters of the soft keyboard.

The smart phone screen and the touch screen provide the display of the soft keyboard and the character input on the soft keyboard respectively, and the acquisition of the coordinate of the input point on the screen and the cursor area and the coincidence degrees between the cursor area and the characters of the soft keyboard aim to improve the input accuracy.

By using the above-mentioned information, the preferred embodiment provides the method for improving the input efficiency of the smart phone, which may include the following steps:
S1, the cursor size and whether to produce the pronunciation of the input character or not are configured in a user configuration.
S2, the character is input by virtue of the soft keyboard on the screen of the smart phone.
S3, the coordinate of the input point of the character input by the user is captured, area coverage is calculated according to the cursor size set by the user, and the coincidence degree between the cursor area and the character on the soft keyboard is calculated. If the character with the highest coincidence degree exists, it is detected whether the character is that to be input by the user or not, otherwise the character input is given up.
S4, a corresponding sound of the input character is produced or a cursor effect of the input character is displayed according to the setting of the user.
S5, N latest coordinates of the character which is correctly input are stored, coordinate values are trained, and a cursor size suitable for the character is found.
S6, the cursor of the character is reset according to the cursor size suitable for the character found in S5.

By the method and the device according to the preferred embodiment, the character input speed of the user is increased, time is saved, and a user experience is improved.

### Preferred embodiment 2

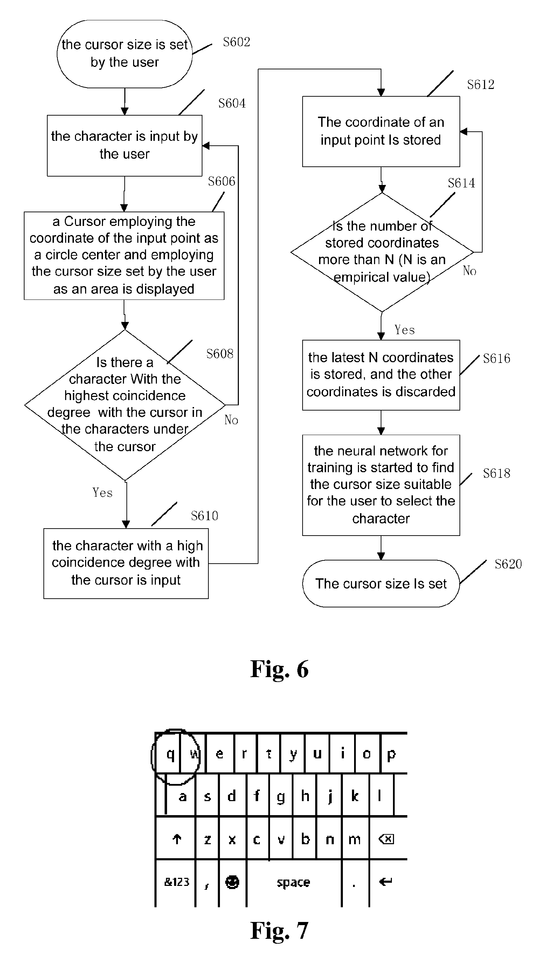

A hardware module part for improving the character input efficiency of the smart phone according to the preferred embodiment can include: a smart phone screen and a touch screen. Fig. 6 is a flowchart of a method for improving character input efficiency of a smart phone according to preferred embodiment 2 of the present invention, and Fig. 7 is a schematic diagram of an example of simultaneously covering three characters by a cursor according to preferred embodiment 2 of the present invention. As shown in Fig. 6, the method includes the following steps:
S602, the cursor size is set by the user, for example, the cursor size may be set in a set item or set to be a default size.
S604, a required character is input on the soft keyboard by the user.
S606, the coordinate of the input point of the user is captured by software, a region employing the coordinate of the input point as a circle center and employing the cursor size set by the user as an area is calculated, and the cursor is displayed, as shown in Fig. 7.
S608, a character with the highest coincidence degree with the cursor in characters on the soft keyboard under the cursor is calculated. If the character exists, turn to S610, otherwise give up this input, and return to S604.
S610, the character as the input character is input, and a corresponding sound of the input character is produced or the cursor of the input character is detected according to the setting of the user.
S612, the coordinate of the input point of the input character is stored.
S614, it is detected whether the stored coordinates of the character is more than N or not, and if yes, turn to S616, otherwise turn to S612.
S616, the oldest coordinate of the input point is discarded, for example, the latest N coordinates are stored, and the other coordinates are stored.
S618, the neural network is started to train the latest N coordinates, and the cursor size suitable for the user to select the character is found.
S620, the cursor size is reset.

Another embodiment also provides software, which is used for executing the technical schemes described in the embodiments and the preferred embodiments.

Another embodiment also provides a storage medium, in which the above-mentioned software is stored, and the storage medium includes, but not limited to, a compact disk, a floppy disk, a hard disk, an erasable memory and the like.

From the above, it can be seen that a mode of calculating the coincidence degrees between the input coverage of the user and the coverage of the items to be input and determining the input item of the user according to the coincidence degrees is adopted, and compared with a mode of determining the input item of the user according to the coverage of the item to be input where the input coordinate of the user falls in the related art, has the advantages that the probability of occurrence of an input error condition can be lowered because a criterion is changed from a point to a range, the problem of high input error rate of the touch screen terminal in the related art is solved, the accuracy of input with the touch screen mobile phone is improved, and the input speed of the user can further be increased.

Obviously, those skilled in the art should know that each module or step of the present invention can be implemented by a universal computing device, and the modules or steps can be concentrated on a single computing device or distributed on a network formed by a plurality of computing devices, and can optionally be implemented by programmable codes executable for the computing devices, so that the modules or steps can be stored in a storage device for execution with the computing devices, or can form each integrated circuit module, or multiple modules or steps therein can form a single integrated circuit module for implementation. As a consequence, the present invention is not limited to any specific hardware and software combination.

The above is only the preferred embodiment of the present invention and not intended to limit the present invention, and for those skilled in the art, the present invention can have various modifications and variations. Any modifications, equivalent replacements, improvements and the like within the spirit and principle of the present invention shall fall within the scope of protection of the present invention.

## Claims

1. An input method, **characterized by** comprising:
determining input coverage of a user according to an input coordinate of the user and a set cursor area;
calculating coincidence degrees between the input coverage and coverage of items to be input; and
determining an input item of the user according to the coincidence degrees.

2. The method according to claim 1, **characterized in that** determining the input item of the user according to the coincidence degrees comprises:
selecting an item to be input with a greater coincidence degree from the items to be input as the input item of the user; or,
selecting an item to be input of which a coincidence degree exceeds a preset threshold value from the items to be input as the input item of the user.

3. The method according to claim 1, **characterized in that** after determining the input item of the user according to the coincidence degrees, the method further comprises:
notifying the user that the input item is input in a way of producing a corresponding pronunciation of the input item and/or displaying a corresponding effect of clicking the input item.

4. The method according to claim 1, **characterized in that** after determining the input item of the user according to the coincidence degrees, the method further comprises:
detecting whether a next input of the user is canceling the input item or not;
under the condition that a detecting result is positive, determining that the input item is incorrectly input; and
under the condition that the detecting result is negative, determining that the input item is correctly input.

5. The method according to claim 4, **characterized by** further comprising:
storing a specified number of latest input coordinates of the input item which is correctly input; and
performing training according to the specified number of input coordinates by virtue of a smart neural network, and resetting the cursor area according to a training result.

6. The method according to any one of claims 1-5, **characterized in that** the items to be input comprise: characters of a virtual keyboard.

7. An input device, **characterized by** comprising:
a confirmation module, configured to determine input coverage of a user according to an input coordinate of the user and a set cursor area;
a calculation module, configured to calculate coincidence degrees between the input coverage and coverage of items to be input; and
a determination module, configured to determine an input item of the user according to the coincidence degrees.

8. The device according to claim 7, **characterized by** further comprising:
a notification module, configured to notify the user that the input item is input in a way of producing a corresponding pronunciation of the input item and/or displaying a corresponding effect of clicking the input item.

9. The device according to claim 7, **characterized by** further comprising:
a detecting module, configured to detect whether a next input of the user is canceling the input item or not; and
a second determination module, configured to, under the condition that a detecting result is positive, determine that the input item is incorrectly input, and under the condition that the detecting result is negative, determine that the input item is correctly input.

10. The device according to claim 9, **characterized by** further comprising:
a storing module, configured to store a specified number of latest input coordinates of the input item which is correctly input;
a training module, configured to perform training according to the specified number of input coordinates by virtue of a smart neural network; and
a resetting module, configured to reset the cursor area according to a training result.
